# EUROPÄISCHE PATENTSCHRIFT

(11) **EP 2 927 414 B1**
(45) Veröffentlichungstag und Bekanntmachung des Hinweises auf die Patenterteilung: **08.06.2016**
(21) Anmeldenummer: 14163403.0
(22) Anmeldetag: 03.04.2014
(51) Int. Cl.: E06B 9/324, A47H 3/02, F16G 11/00

(54) **Seilspannvorrichtung für einen Fensterbehang**
Cable tensioning device for a window screen
Dispositif tendeur de câble pour un dispositif d'obturation de fenêtre

(43) Veröffentlichungstag der Anmeldung: 07.10.2015
(73) Patentinhaber: Inventex Establishment, 9486 Schaanwald (LI)
(72) Erfinder: Kohler, Dietmar, 6850 Dornbirn (AT)
(74) Vertreter: Schlögl, Markus

(56) Entgegenhaltungen:
- EP-A2- 1 748 144
- WO-A1-2013/187431
- DE-U1-202012 103 023

## Beschreibung

Die Erfindung betrifft eine Spannvorrichtung zum Halten der Spannung eines Seils, welches insbesondere der Halterung eines Blick- und/oder Sonnenschutzes dient, gemäß dem Oberbegriff des Anspruchs 1.

Eine derartige Spannvorrichtung umfasst ein Trägerteil zum Festlegen der Spannvorrichtung an einem Untergrund, wobei das Trägerteil eine Ausnehmung aufweist, deren Ausrichtung in das Trägerteil hinein oder durch das Trägerteil hindurch senkrecht zu einer vorgesehenen Seilspannrichtung ist, und ein im Wesentlichen bolzenförmiges Klemmteil, das in Richtung seiner Längsachse senkrecht zur vorgesehenen Seilspannrichtung und/oder parallel zur Ausrichtung der Ausnehmung in die Ausnehmung eingeführt ist. Bei dem Untergrund kann es sich beispielsweise um einen Fenster- oder Türrahmen handeln.

DE 20 2012 103 023 U1 offenbart eine Spannvorrichtung zum Spannen eines Seils. Ferner wird zum Stand der Technik auf EP 1 748 144 A2 verweisen. Spannvorrichtungen zum Halten der Spannung eines Seils, welches der Halterung eines Blick- und/oder Sonnenschutzes dient, sind folglich im Stand der Technik bekannt. Bei diesen Spannvorrichtungen besteht jedoch häufig das Problem, dass sie relativ umständlich zu bedienen sind. Insbesondere ein Nachjustieren bzw. Nachspannen des Seils gestaltet sich oft schwierig, da das Seil - sofern einmal durch die Spannvorrichtung in Position gehalten - sich mitunter nur schwierig wieder lösen lässt. Ein erneutes Festklemmen des Seils ist häufig gar nicht erst möglich. Mitunter können solche Spannvorrichtungen auch lediglich unter Einsatz von zusätzlichen Werkzeugen gehandhabt werden.

Es ist daher Aufgabe der Erfindung, eine neue Spannvorrichtung anzugeben, insbesondere eine Spannvorrichtung, welche einfach handhabbar ist und ein wiederholtes Spannen und Halten des Seils ermöglicht.

Diese Aufgabe wird gelöst durch die Merkmale des Anspruchs 1. Vorteilhafte Ausgestaltungen und Weiterbildungen sind in den jeweils abhängigen Ansprüchen angegeben.

Die erfindungsgemäße Spannvorrichtung ist dadurch gekennzeichnet, dass das Klemmteil wenigstens einen sich senkrecht zur Längsachse durch das Klemmteil hindurch erstreckenden Durchgang zur Aufnahme des Seils, insbesondere einen entlang der Längsachse in das Klemmteil hineinreichenden Spalt, aufweist, wobei das in die Ausnehmung des Trägerteils eingeschobene Klemmteil zwischen einem Spannzustand, in dem das in den Durchgang aufgenommene Seil im Durchgang beweglich und damit spannbar ist, und einem Klemmzustand, in dem das in den Durchgang aufgenommene Seil zwischen Klemmteil und Trägerteil festgeklemmt und damit eine Spannung des Seils gehalten ist, beweglich ist. Ferner ist die Erfindung dadurch gekennzeichnet, dass das Klemmteil an seiner Umfangsfläche Rastelemente aufweist, wobei wenigstens zwei Arten von Rastelementen vorgesehen sind, wobei mindestens ein erstes Rastelement einer ersten Art von Rastelementen im Bereich des dem Trägerteil zu orientierten Endes des Klemmteils und mindestens ein zweites Rastelement einer zweiten Art von Rastelementen in einem vorgesehen axialen Abstand entlang der Längsachse versetzt zur ersten Art von Rastelementen vorgesehen ist. Weiter ist die Erfindung dadurch gekennzeichnet, dass die Ausnehmung eine im Wesentlichen zylindrische Innenfläche mit einer Längsachse aufweist, wobei an der Innenfläche mindestens eine Rastnase ausgebildet ist. Zudem ist die Erfindung dadurch gekennzeichnet, dass sich das Klemmteil im Spannzustand in einer ersten Position befindet, in der das mindestens eine erste Rastelement des Klemmteils mit der mindestens einen Rastnase der Ausnehmung verrastet ist, und dass sich das Klemmteil im Klemmzustand in einer zweiten Position befindet, in der das mindestens eine zweite Rastelement des Klemmteils mit der mindestens einen Rastnase der Ausnehmung verrastet ist.

Der vorgenannte axiale Abstand schließt nicht aus, dass erste und zweite Rastelemente entlang des Umfangs auch versetzt zueinander angeordnet sein können.

Durch Kraftaufwendung kann zwar gegebenenfalls das Klemmteil gegen die Verrastung in der ersten Position aus dem Trägerteil herausgezogen werden, dennoch verhindert die Verrastung ein einfaches Herausrutschen des Klemmteils aus dem Trägerteil, das heißt einem Nutzer können Trägerteil und Klemmteil bereits im Verbund in der ersten Position bereitgestellt werden, zur Verwendung unter anderem zum Spannen eines Seils, gegebenenfalls nach dem Anbringen an einem Untergrund, beispielsweise einem Fenster oder Türrahmen.

Die Vorteile der Erfindung liegen insbesondere darin, dass sich mit der erfindungsgemäßen Spannvorrichtung ein Seil, welches der Halterung einer Blick- oder Sonnenschutzvorrichtung dient, einfach Spannen lässt und anschließend die Spannung des Seils gehalten wird. Ein wiederholtes Nachspannen bzw. eine Änderung der Spannung und eine erneutes Halten des Seils mit der vorgesehenen Spannung werden ebenso gewährleistet.

Ein weiterer Vorteil der erfindungsgemäßen Spannvorrichtung liegt darin, dass sie einfach handhabbar ist und nicht zwingend weiteres Werkzeug zur ihrer Bedienung benötigt wird. Ferner werden lediglich zwei Einzelbauteile benötigt, die beide insbesondere aus Kunststoff, vorzugsweise aus dem gleichen Kunststoff, bestehen können, wodurch eine kostengünstige Herstellung ermöglicht wird.

Gemäß einer Weiterbildung der Erfindung ist das Klemmteil um seine Längsachse drehbar in der Ausnehmung angeordnet.

Eine Weiterbildung sieht vor, dass das Klemmteil in mindestens einer ersten Drehstellung um seine Längsachse aus dem Spannzustand durch Verschiebung entlang seiner Längsachse in die Ausnehmung hinein in den Klemmzustand überführbar ist. Vorzugsweise ist an der Innenfläche der Ausnehmung mindestens eine Nut parallel zur Längsachse der Ausnehmung zur Führung des mindestens einen zweiten Rastelements vorgesehen ist, wobei die mindestens eine Nut sich vorzugsweise zwischen dem dem Klemmteil zugewandten Ende der Ausnehmung und der mindestens einen Rastnase erstreckt. Durch die Nut wird die erste Drehstellung des Klemmteils vorzugsweise bereits im Spannzustand vorgegeben, die das Klemmteil einnehmen muss, damit die vorgenannte Verschiebung des Klemmteils zur Überführung in den Klemmzustand ausführbar ist

Es kann auch vorgesehen sein, dass zwei erste Rastelemente ein erstes Paar von Rastelementen und zwei zweite Rastelemente ein zweites Paar von Rastelementen bilden, wobei die beiden Rastelemente jedes Paares von Rastelementen vorzugsweise symmetrisch zu einer Ebene senkrecht zur Längsachse des Klemmteils ausgebildet sind. Weiter können zwei Rastnasen ein Paar von Rastnasen bilden, wobei die Rastnasen des Paares von Rastnasen vorzugsweise symmetrisch zu einer Ebene senkrecht zur Längsachse der Ausnehmung ausgebildet sind.

Eine Ausführungsvariante sieht vor, dass sich das zweite Paar von Rastelementen des Klemmteils nur teilweise entlang des Umfangs des Klemmteils erstreckt, und dass sich das Paar von Rastnasen nur teilweise entlang eines Innenumfangs der Innenfläche der Ausnehmung erstreckt. Zwischen den beiden Rastelementen des zweiten Paares von Rastelementen und zwischen den beiden Rastnasen des Paares von Rastnasen sind dann in Umfangsrichtung je zwei Freiräume ausgebildet. Die Freiräume zwischen den beiden Rastelementen des zweiten Paares von Rastelementen in Umfangsrichtung sind wenigstens so lang wie die Erstreckung der Rastnasen in Umfangsrichtung und die Freiräume zwischen den beiden Rastnasen in Umfangsrichtung sind wenigstens so lang wie die Erstreckung der Rastelemente des zweiten Paares von Rastelementen in Umfangsrichtung, so dass die Rastelemente des zweiten Paares von Rastelementen in mindestens einer zweiten Drehstellung des Klemmteils um seine Längsachse durch die beiden Freiräume zwischen den Rastnasen und die Rastnasen durch die beiden Freiräume zwischen den Rastelementen des zweiten Paares von Rastelementen bewegbar sind, so dass das Klemmteil in der mindestens einen zweiten Drehstellung um seine Längsachse aus dem Klemmzustand durch Verschiebung entlang seiner Längsachse aus der Ausnehmung heraus in den Spannzustand überführbar ist.

Bevorzugt ist die Spannvorrichtung so ausgebildet, das das Klemmteil zum Überführen aus dem Klemmzustand in den Spannzustand zunächst durch eine Drehung, vorzugsweise eine Vierteldrehung, des Klemmteils um seine Längsachse von der ersten Drehstellung in die zweite Drehstellung überführbar ist und anschließend das Klemmteil in der zweiten Drehstellung durch Verschiebung entlang seiner Längsachse aus der Ausnehmung heraus in den Spannzustand überführbar ist.

Zum Festklemmen des Seils zwischen Klemmteil und Trägerteil im Klemmzustand können eine Klemmfläche des Klemmteils und einer Klemmfläche des Trägerteils aneinander anliegen. Vorzugsweise weisen die Klemmfläche des Trägerteils und/oder die Klemmfläche des Klemmteils eine parallel zur vorgesehenen Seilspannrichtung ausgebildete Nut zur Aufnahme des Seils auf. Zweckmäßigerweise ist diese Nut gegenüber der Klemmfläche des Trägerteils vorzugsweise wenigstens so tief ist, dass sie das Seil bei Kontakt von Klemmteil und Trägerteil wenigstens teilweise aufnehmen kann.

Eine zweckmäßige Weiterbildung der Erfindung sieht vor, dass das Klemmteil durch das Vorsehen des Durchgangs, insbesondere des als Spalt ausgebildeten Durchgangs, in einer Ebene senkrecht zur Längsachse des Klemmsteil abschnittsweise federnd ausgebildet ist derart, dass durch Einschieben des Klemmteils in die Ausnehmung das Klemmteil beim gegenseitigen Passieren von Rastnasen und Rastelementen zusammengedrückt wird oder zusammendrückbar ist, und dass nach dem Passieren von Rastnasen und Rastelementen das Klemmteil durch Auseinanderfedern mit dem Trägerteil verrastet oder verrastbar ist. Die Rastelemente hintergreifen hierbei die Rastnasen, wobei das Klemmteil bei Verrasten der Rastnasen mit den ersten Rastelementen seinen Spannzustand einnimmt und bei Verrasten der Rastnasen mit den zweiten Rastelementen seinen Klemmzustand einnimmt.

Das Klemmteil kann an einer dem Trägerteil abgewandten Fläche eine Ansatznut zum Ansetzen eines Werkzeugs zur Durchführung einer Drehbewegung aufweist, wobei sich die Ansatznut vorzugsweise senkrecht zur Längsachse des Klemmteils erstreckt. Auch wenn die Spannvorrichtung grundsätzlich ohne den Einsatz eines Werkzeugs bedienbar ist, kann die Bedienung durch den Einsatz beispielsweise eines Schraubenziehers oder Schraubendreher, gegebenenfalls alternativ aber einfach auch nur unter Zuhilfenahme einer Münze oder vergleichbarer Objekte, vereinfacht werden.

Gemäß einer Weiterbildung umfasst die erfindungsgemäße Spannvorrichtung eine Abdeckkappe, wobei die Abdeckkappe mit dem Trägerteil verbunden oder verbindbar ist, wobei die Abdeckkappe im Verbundzustand das Klemmteil sowie die Ausnehmung verdeckt. Vorzugsweise weist die Abdeckkappe an ihren in Seilspannrichtung kopf- und bodenseitigen Flächen jeweils eine Öffnung, vorzugsweise einen Spalt, zur Durchführung des Seils auf. Die Abdeckkappe dient unter anderem der optischen Aufwertung, da durch diese eine Vielzahl der Bauteile der Spannvorrichtung sauber verdeckt werden. Die Abdeckkappe kann beispielsweise auf das Trägerteil aufgesteckt oder aufgeklipst werden.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen
- FIG 1: ein Ausführungsbeispiel der erfindungsgemäßen Spannvorrichtung in einer dreidimensionalen Explosionsdarstellung;
- FIG 2: das Ausführungsbeispiel nach FIG 1 in einer dreidimensionalen Darstellung im Klemmzustand;
- FIG 3: einen horizontalen Schnitt auf Höhe der Längsachse des Klemmteils durch die Spannvorrichtung nach FIG 2 mit Blickwinkel von oben;
- FIG 4: eine Detaildarstellung des in FIG 3 markierten Bereichs;
- FIG 5: einen vertikalen Schnitt parallel zum Seil durch die Spannvorrichtung nach FIG 2 mit Blickwinkel von vorn;
- FIG 6: das Ausführungsbeispiel nach FIG 1 in einer dreidimensionalen Darstellung im Spannzustand;
- FIG 7: einen horizontalen Schnitt auf Höhe der Längsachse des Klemmteils durch die Spannvorrichtung nach FIG 6 mit Blickwinkel von oben;
- FIG 8: eine Detaildarstellung des in FIG 3 markierten Bereichs;
- FIG 9: einen vertikalen Schnitt parallel zum Seil durch die Spannvorrichtung nach FIG 6 mit Blickwinkel von vorn.

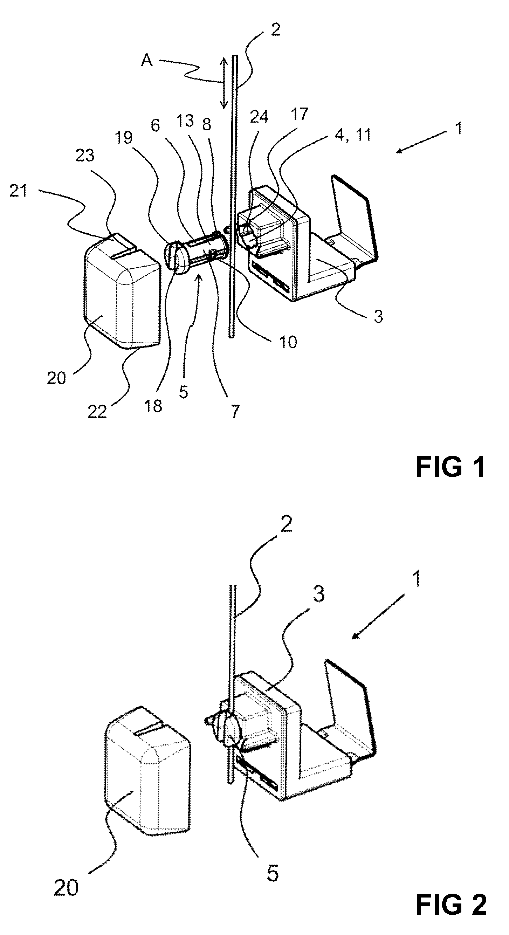

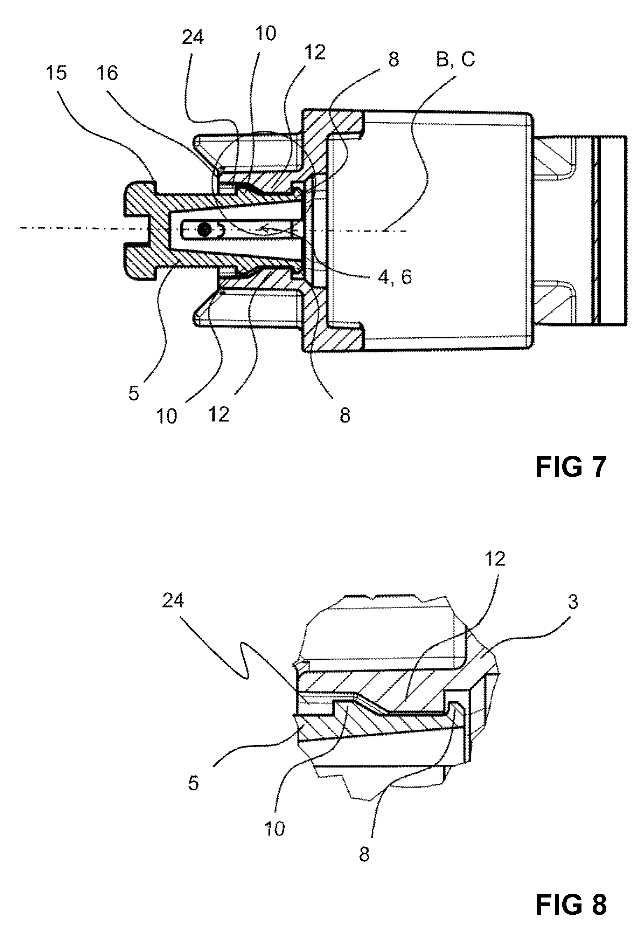

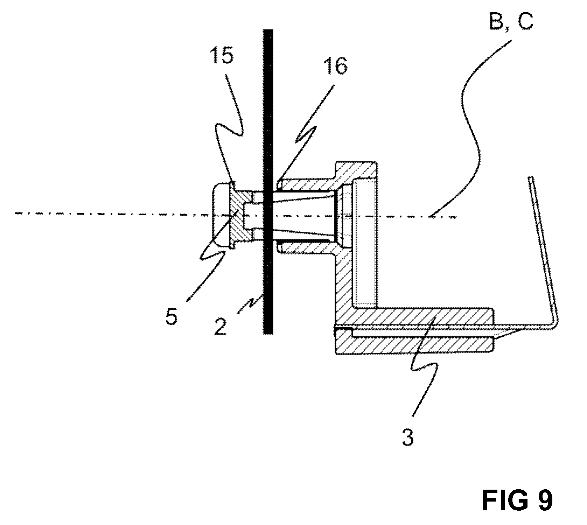

Einander entsprechende Teile und Komponenten in FIG 1 bis FIG 9, auch über die verschiedenen Ausführungsbeispiele hinweg, sind mit den gleichen Bezugszeichen bezeichnet.

FIG 1, FIG 2 und FIG 6 zeigen eine erfindungsgemäße Spannvorrichtung 1 zum Halten der Spannung eines Seils 2, welches insbesondere der Halterung eines Blick- und/oder Sonnenschutzes (nicht dargestellt) dient.

Die Spannvorrichtung 1 umfasst ein Trägerteil 3 zum Festlegen der Spannvorrichtung 1 an einem Untergrund, wie beispielsweise einen Fenster- oder Türrahmen. Das Trägerteil 3 weist eine Ausnehmung 4 auf, deren Ausrichtung in das Trägerteil 3 hinein bzw. durch das Trägerteil 3 hindurch senkrecht zu einer vorgesehenen Seilspannrichtung A ist. Die Spannvorrichtung 1 umfasst ferner ein im Wesentlichen bolzenförmiges Klemmteil 5, das in Richtung seiner Längsachse B senkrecht zur vorgesehenen Seilspannrichtung A und parallel zur Ausrichtung der Ausnehmung 4 in die Ausnehmung 4 eingeführt ist.

Das Klemmteil 5 weist einen entlang der Längsachse B in das Klemmteil 5 hineinreichenden und sich senkrecht zur Längsachse B durch das Klemmteil 5 hindurch erstreckenden Spalt 6 zur Aufnahme des Seils 2 auf.

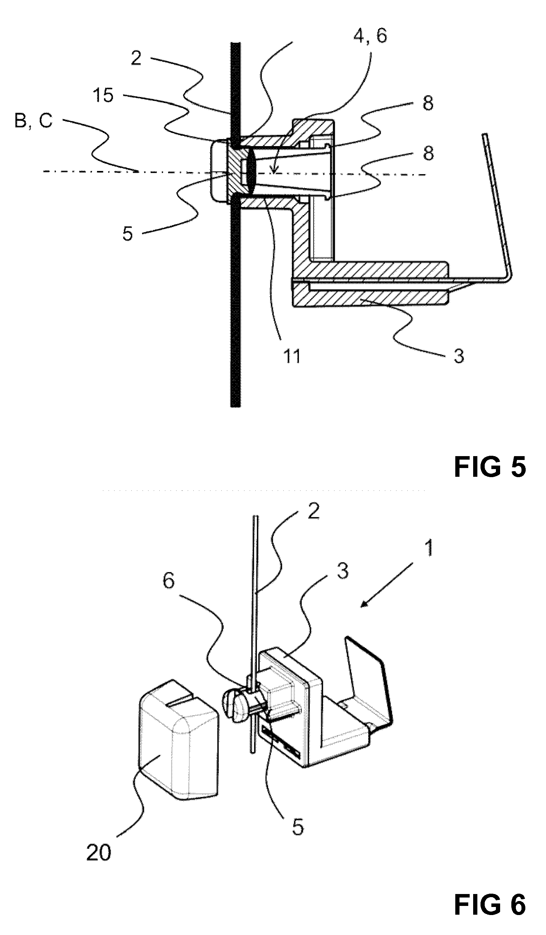

Das in die Ausnehmung 4 des Trägerteils 3 eingeschobene Klemmteil 5 ist zwischen einem Spannzustand (dargestellt in FIG 6), in dem das in den Durchgang 6 aufgenommene Seil 2 im Durchgang 6 beweglich und damit spannbar ist, und einem Klemmzustand (dargestellt in FIG 2), in dem das in den Durchgang 6 aufgenommene Seil 2 zwischen Klemmteil 5 und Trägerteil 3 festgeklemmt und damit eine Spannung des Seils 2 gehalten ist, beweglich.

Das Klemmteil 5 ist zudem um seine Längsachse B drehbar in der Ausnehmung 4 angeordnet.

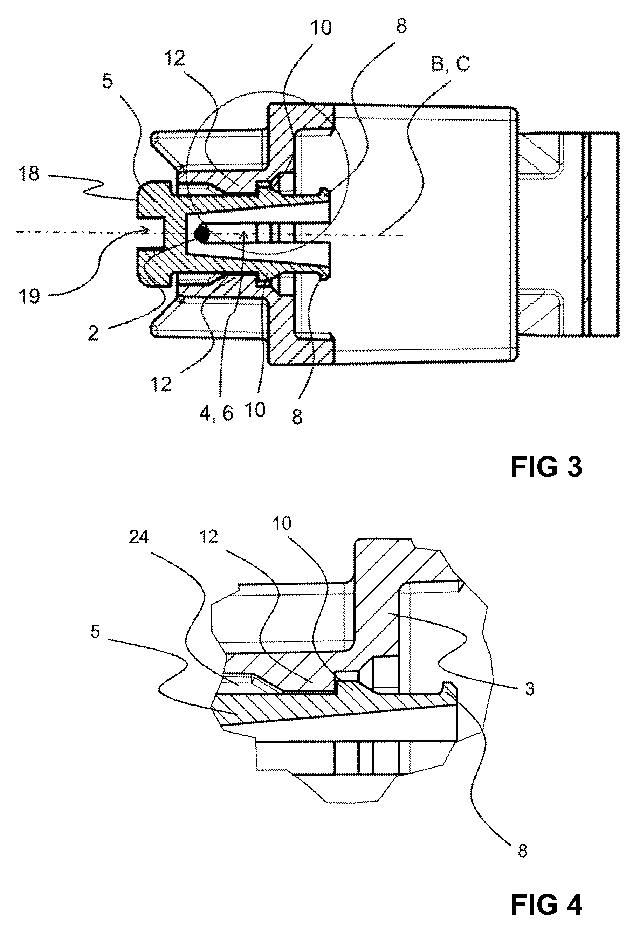

FIG 3 und 4 sowie FIG 7 und 8 zeigen das Klemmteil 5 und das Trägerteil 3. Das Klemmteil 5 weist an seiner Umfangsfläche 7 Rastelemente 8, 10 auf. Es sind zwei Paare von Rastelementen 8, 10 am Klemmteil 5 vorgesehen. Ein erstes Paar von Rastelementen 8 ist im Bereich des dem Trägerteil 3 zu orientierten Endes 9 des Klemmteils 5 vorgesehen und ein zweites Paar von Rastelementen 10 in einem vorgesehen Abstand entlang der Längsachse B versetzt zum ersten Paar von Rastelementen 8. Die beiden Rastelemente 8, 10 jedes Paares von Rastelementen 8, 10 sind symmetrisch zu einer Ebene senkrecht zur Längsachse B des Klemmteils 5 ausgebildet. Die Ausnehmung 4 weist eine im Wesentlichen zylindrische Innenfläche 11 und eine Längsachse C auf, wobei an der Innenfläche 11 Rastnasen 12 ausgebildet sind. Es ist ein Paar von Rastnasen 12 vorgesehen, wobei die Rastnasen 12 jedes Paares von Rastnasen 12 symmetrisch zu einer Ebene senkrecht zur Längsachse C der Ausnehmung 4 ausgebildet sind.

FIG 6 bis FIG 9 zeigen das Klemmteil 5 im Spannzustand. Im Spannzustand befindet sich das Klemmteil 5 in einer ersten Position. In dieser ersten Position ist das erste Paar der Rastelemente 8 des Klemmteils 5 mit den Rastnasen 12 der Ausnehmung 4 verrastet. Diese Verrastung verhindert ein vollständiges Herausrutschen des Klemmteils 5 aus dem Trägerteil 3. Das Klemmteil 5 ist in mindestens einer ersten Drehstellung um seine Längsachse B aus dem Spannzustand durch Verschiebung entlang seiner Längsachse B in die Ausnehmung 4 hinein in den Klemmzustand überführbar.

FIG 2 bis FIG 5 zeigen das Klemmteil 5 im Klemmzustand. Im Klemmzustand befindet sich das Klemmteil 5 in einer zweiten Position, in der das zweite Paar der Rastelemente 10 des Klemmteils 5 mit den Rastnasen 12 der Ausnehmung 4 verrastet ist.

Das Klemmteil 5 ist im Spannzustand entlang seiner Längsachse B verschiebbar in der Ausnehmung 4 angeordnet, wobei an der Innenfläche 11 zwei Nuten 24 parallel zur Längsachse C der Ausnehmung 4 zur Führung des zweiten Paares von Rastelementen 10 vorgesehen ist. Die Nuten 24 erstrecken sich zwischen dem Klemmteil 5 zugeordneten Ende der Ausnehmung 4 und den Rastnasen 12.

Das zweite Paar von Rastelementen 10 des Klemmteils 5 erstreckt sich nur teilweise entlang des Umfangs des Klemmteils 5 und das Paar von Rastnasen 12 erstreckt sich nur teilweise entlang des Innenumfangs der Innenfläche 11 der Ausnehmung 4. Dies führt dazu, dass zwischen den beiden Rastelementen 10 und zwischen den beiden Rastnasen 12 radial je zwei Freiräume 13, 14 ausgebildet sind.

Die Freiräume 13 zwischen den beiden Rastelementen 10 sind in Umfangsrichtung wenigstens so lang wie die Erstreckung der Rastnasen 12 in Umfangsrichtung und die Freiräume 14 zwischen den beiden Rastnasen 12 sind in Umfangsrichtung wenigstens so lang wie die Erstreckung der Rastelemente 10 in Umfangsrichtung, so dass die Rastelemente 10 des zweiten Paares von Rastelementen 10 in mindestens einer zweiten Drehstellung des Klemmteils 5 um seine Längsachse B durch die beiden Freiräume 14 zwischen den Rastnasen 12 und die Rastnasen 12 durch die beiden Freiräume 13 zwischen den Rastelementen 10 des zweiten Paares von Rastelementen 10 bewegbar sind, so dass das Klemmteil 5 in der mindestens einen zweiten Drehstellung um seine Längsachse B aus dem Klemmzustand durch Verschiebung entlang seiner Längsachse B aus der Ausnehmung 4 heraus in den Spannzustand überführbar ist.

Wie in FIG 5 dargestellt, liegen zum Festklemmen des Seils 2 zwischen Klemmteil 5 und Trägerteil 3 im Klemmzustand eine Klemmfläche 15 des Klemmteils 5 und einer Klemmfläche 16 des Trägerteils 3 aneinander an. Die Klemmfläche 16 des Trägerteils 3 weist eine parallel zur vorgesehenen Seilspannrichtung A ausgebildete Nut 17 zur Aufnahme des Seils 2 auf, welche gegenüber der Klemmfläche 16 des Trägerteils 3 wenigstens so tief ist, dass sie das Seil 2 bei Kontakt von Klemmteil 5 und Trägerteil 3 wenigstens teilweise aufnehmen kann.

Das Klemmteil 5 ist, wie aus FIG 1 ersichtlich, durch Vorsehen des Durchgangs 6 in einer Ebene senkrecht zur Längsachse A des Klemmsteil 5 federnd ausgebildet. Durch Einschieben des Klemmteils 5 in die Ausnehmung 4 wird das Klemmteil 5 beim gegenseitigen Passieren von Rastnasen 12 und Rastelementen 8, 10 zusammengedrückt. Nach dem Passieren von Rastnasen 12 und Rastelementen 8, 10 federt das Klemmteil 5 auseinander und verrastet mit dem Trägerteil 3 indem die Rastelemente 8, 10 die Rastnasen 12 hintergreifen.

FIG 1 bis 3 und FIG 6 und 7 zeigen, dass das Klemmteil 5 an einer dem Trägerteil 3 abgewandten Fläche 18 eine Ansatznut 19 zum Ansetzen eines Werkzeugs zur Initiierung einer Drehbewegung aufweist, wobei sich die Ansatznut 19 senkrecht zur Längsachse A des Klemmteils 5 erstreckt.

Die Spannvorrichtung 1 umfasst, wie in FIG 1, FIG 2 und FIG 6 dargestellt, eine Abdeckkappe 20. Die Abdeckkappe 20 ist mit dem Trägerteil 3 verbindbar, wobei die Abdeckkappe 20 im Verbundzustand das Klemmteil 5 sowie die Ausnehmung 4 verdeckt. Die Abdeckkappe 20 weist an ihren in Seilspannrichtung A kopf- und bodenseitigen Flächen 21, 22 jeweils einen Spalt 23 zur Durchführung des Seils 2 auf.

### Bezugszeichenliste

- 1: Spannvorrichtung
- 2: Seil
- 3: Trägerteil
- 4: Ausnehmung
- 5: Klemmteil
- 6: Durchgang
- 7: Umfangsfläche
- 8: erste Rastelemente
- 9: Ende
- 10: zweite Rastelemente
- 11: Innenfläche
- 12: Rastnase
- 13: Freiraum
- 14: Freiraum
- 15: Klemmfläche
- 16: Klemmfläche
- 17: Nut
- 18: Fläche
- 19: Ansatznut
- 20: Abdeckkappe
- 21: kopfseitige Fläche
- 22: bodenseitige Fläche
- 23: Öffnung
- 24: Nut

- A: Seilspannrichtung
- B: Längsachse
- C: Längsachse

## Patentansprüche

1. Spannvorrichtung (1) zum Halten der Spannung eines Seils (2), welches insbesondere der Halterung eines Blick- und/oder Sonnenschutzes dient, umfassend:
ein Trägerteil (3) zum Festlegen der Spannvorrichtung (1) an einem Untergrund, wobei das Trägerteil (3) eine Ausnehmung (4) aufweist, deren Ausrichtung in das Trägerteil (3) hinein oder durch das Trägerteil (3) hindurch senkrecht zu einer vorgesehenen Seilspannrichtung (A) ist, und
ein im Wesentlichen bolzenförmiges Klemmteil (5), das in Richtung seiner Längsachse (B) senkrecht zur vorgesehenen Seilspannrichtung (A) und/oder parallel zur Ausrichtung der Ausnehmung (4) in die Ausnehmung (4) eingeführt ist,
wobei das Klemmteil (5) wenigstens einen sich senkrecht zur Längsachse (B) durch das Klemmteil (5) hindurch erstreckenden Durchgang (6) zur Aufnahme des Seils (2), insbesondere einen entlang der Längsachse (B) in das Klemmteil (5) hineinreichenden Spalt, aufweist, **dadurch gekennzeichnet, dass** das in die Ausnehmung (4) des Trägerteils (3) eingeschobene Klemmteil (5) zwischen einem Spannzustand, in dem das in den Durchgang (6) aufgenommene Seil (2) im Durchgang (6) beweglich und damit spannbar ist, und einem Klemmzustand, in dem das in den Durchgang (6) aufgenommene Seil (2) zwischen Klemmteil (5) und Trägerteil (3) festgeklemmt und damit eine Spannung des Seils (2) gehalten ist, beweglich ist,
dass das Klemmteil (5) an seiner Umfangsfläche (7) Rastelemente (8; 10) aufweist, wobei wenigstens zwei Arten von Rastelementen (8; 10) vorgesehen sind, wobei mindestens ein erstes Rastelement (8) einer ersten Art von Rastelementen (8) im Bereich des dem Trägerteil (3) zu orientierten Endes (9) des Klemmteils (5) und mindestens ein zweites Rastelement (9) einer zweiten Art von Rastelementen (10) in einem vorgesehen axialen Abstand entlang der Längsachse (B) versetzt zur ersten Art von Rastelementen (8) vorgesehen ist,
dass die Ausnehmung (4) eine im Wesentlichen zylindrische Innenfläche (11) mit einer Längsachse (C) aufweist, wobei an der Innenfläche (11) mindestens eine Rastnase (12) ausgebildet ist,
dass sich das Klemmteil (5) im Spannzustand in einer ersten Position befindet, in der das mindestens eine erste Rastelement (8) des Klemmteils (5) mit der mindestens einen Rastnase (12) der Ausnehmung (4) verrastet ist, und
dass sich das Klemmteil (5) im Klemmzustand in einer zweiten Position befindet, in der das mindestens eine zweite Rastelement (10) des Klemmteils (5) mit der mindestens einen Rastnase (12) der Ausnehmung (4) verrastet ist.

2. Spannvorrichtung nach Anspruch 1,
**dadurch gekennzeichnet, dass**
das Klemmteil (5) um seine Längsachse (B) drehbar in der Ausnehmung (4) angeordnet ist.

3. Spannvorrichtung nach Anspruch 1 oder 2,
**dadurch gekennzeichnet, dass**
das Klemmteil (5) in mindestens einer ersten Drehstellung um seine Längsachse (B) aus dem Spannzustand durch Verschiebung entlang seiner Längsachse (B) in die Ausnehmung (4) hinein in den Klemmzustand überführbar ist.

4. Spannvorrichtung nach Anspruch einem der Ansprüche 1 bis 3,
**dadurch gekennzeichnet, dass**
an der Innenfläche (11) der Ausnehmung (4) mindestens eine Nut (24) parallel zur Längsachse (C) der Ausnehmung (4) zur Führung des mindestens einen zweiten Rastelements (10) vorgesehen ist, wobei die mindestens eine Nut (24) sich vorzugsweise zwischen dem dem Klemmteil (5) zugewandten Ende der Ausnehmung (4) und der mindestens einen Rastnase (12) erstreckt.

5. Spannvorrichtung nach einem der vorhergehenden Ansprüche,
**dadurch gekennzeichnet,**
**dass** zwei erste Rastelemente (8) ein erstes Paar von Rastelementen (8) und zwei zweite Rastelemente (10) ein zweites Paar von Rastelementen (10) bilden, wobei die beiden Rastelemente (8; 10) jedes Paares von Rastelementen (8; 10) vorzugsweise symmetrisch zu einer Ebene senkrecht zur Längsachse (B) des Klemmteils (5) ausgebildet sind, und
**dass** zwei Rastnasen (12) ein Paar von Rastnasen (12) bilden, wobei die Rastnasen (12) des Paares von Rastnasen (12) vorzugsweise symmetrisch zu einer Ebene senkrecht zur Längsachse (C) der Ausnehmung (4) ausgebildet sind.

6. Spannvorrichtung nach Anspruch 5,
**dadurch gekennzeichnet,**
**dass** sich das zweite Paar von Rastelementen (10) des Klemmteils (5) nur teilweise entlang des Umfangs des Klemmteils (5) erstreckt, und
**dass** sich das Paar von Rastnasen (12) nur teilweise entlang eines Innenumfangs der Innenfläche (11) der Ausnehmung (4) erstreckt, wobei zwischen den beiden Rastelementen (10) des zweiten Paares von Rastelementen (10) und zwischen den beiden Rastnasen (12) des Paares von Rastnasen (12) in Umfangsrichtung je zwei Freiräume (13; 14) ausgebildet sind,
wobei die Freiräume (13) zwischen den beiden Rastelementen (10) des zweiten Paares von Rastelementen (10) in Umfangsrichtung wenigstens so lang wie die Erstreckung der Rastnasen (12) in Umfangsrichtung und die Freiräume (14) zwischen den beiden Rastnasen (12) in Umfangsrichtung wenigstens so lang wie die Erstreckung der Rastelemente (10) des zweiten Paares von Rastelementen (10) in Umfangsrichtung sind,
so dass die Rastelemente (10) des zweiten Paares von Rastelementen (10) in mindestens einer zweiten Drehstellung des Klemmteils (5) um seine Längsachse (B) durch die beiden Freiräume (14) zwischen den Rastnasen (12) und die Rastnasen (12) durch die beiden Freiräume (13) zwischen den Rastelementen (10) des zweiten Paares von Rastelementen (10) bewegbar sind,
so dass das Klemmteil (5) in der mindestens einen zweiten Drehstellung um seine Längsachse (B) aus dem Klemmzustand durch Verschiebung entlang seiner Längsachse (B) aus der Ausnehmung (4) heraus in den Spannzustand überführbar ist.

7. Spannvorrichtung nach den Ansprüchen 3 und 6,
**dadurch gekennzeichnet,**
**dass** die Spannvorrichtung so ausgebildet ist, das das Klemmteil (5) zum Überführen aus dem Klemmzustand in den Spannzustand zunächst durch eine Drehung, vorzugsweise eine Vierteldrehung, des Klemmteils (5) um seine Längsachse (B) von der ersten Drehstellung in die zweite Drehstellung überführbar ist und anschließend das Klemmteil (5) in der zweiten Drehstellung durch Verschiebung entlang seiner Längsachse (B) aus der Ausnehmung (4) heraus in den Spannzustand überführbar ist.

8. Spannvorrichtung nach einem der vorhergehenden Ansprüche, **dadurch gekennzeichnet, dass**
zum Festklemmen des Seils (2) zwischen Klemmteil (5) und Trägerteil (3) im Klemmzustand eine Klemmfläche (15) des Klemmteils (5) und einer Klemmfläche (16) des Trägerteils (3) aneinander anliegen, wobei die Klemmfläche (16) des Trägerteils (3) und/oder die Klemmfläche (15) des Klemmteils (5) vorzugsweise eine parallel zur vorgesehenen Seilspannrichtung (A) ausgebildete Nut (17) zur Aufnahme des Seils (2) aufweisen, wobei die Nut (17) gegenüber der Klemmfläche (16) des Trägerteils (3) vorzugsweise wenigstens so tief ist, dass sie das Seil (2) bei Kontakt von Klemmteil (5) und Trägerteil (3) wenigstens teilweise aufnehmen kann.

9. Spannvorrichtung nach einem der vorhergehenden Ansprüche,
**dadurch gekennzeichnet, dass**
das Klemmteil (5) durch das Vorsehen des Durchgangs (6), insbesondere des als Spalt ausgebildeten Durchgangs (6), in einer Ebene senkrecht zur Längsachse (A) des Klemmsteil (5) abschnittsweise federnd ausgebildet ist derart,
dass durch Einschieben des Klemmteils (5) in die Ausnehmung (4) das Klemmteil (5) beim gegenseitigen Passieren von Rastnasen (12) und Rastelementen (8; 10) zusammengedrückt wird oder zusammendrückbar ist, und
dass nach dem Passieren von Rastnasen (12) und Rastelementen (8; 10) das Klemmteil (5) durch Auseinanderfedern mit dem Trägerteil (3) verrastet oder verrastbar ist, wobei die Rastelemente (8; 10) die Rastnasen (12) hintergreifen, und wobei das Klemmteil (5) bei Verrasten der Rastnasen (12) mit den ersten Rastelementen (8) seinen Spannzustand einnimmt und bei Verrasten der Rastnasen (12) mit den zweiten Rastelementen (10) seinen Klemmzustand einnimmt.

10. Spannvorrichtung nach einem der vorhergehenden Ansprüche,
**dadurch gekennzeichnet, dass**
das Klemmteil (5) an einer dem Trägerteil (3) abgewandten Fläche (18) eine Ansatznut (19) zum Ansetzen eines Werkzeugs zur Durchführung einer Drehbewegung aufweist, wobei sich die Ansatznut (19) vorzugsweise senkrecht zur Längsachse (B) des Klemmteils (5) erstreckt.

11. Spannvorrichtung nach einem der vorhergehenden Ansprüche,
**dadurch gekennzeichnet, dass**
die Spannvorrichtung (1) eine Abdeckkappe (20) umfasst, wobei die Abdeckkappe (20) mit dem Trägerteil (3) verbunden oder verbindbar ist, wobei die Abdeckkappe (20) im Verbundzustand das Klemmteil (5) sowie die Ausnehmung (4) verdeckt,
wobei die Abdeckkappe (20) an ihren in Seilspannrichtung (A) kopf- und bodenseitigen Flächen (21; 22) jeweils eine Öffnung (23), vorzugsweise einen Spalt (23), zur Durchführung des Seils (2) aufweist.

## Claims

1. Tensioning device (1) for maintaining the tension in a cable (2) which serves in particular for holding a privacy screen or sunscreen, comprising:
a carrier part (3) for fixing the tensioning device (1) to an underlying surface, wherein the carrier part (3) has a cutout (4), the orientation of which into the carrier part (3) or through the carrier part (3) is perpendicular to a provided cable-tensioning direction (A), and
a substantially bolt-like clamping part (5) which is introduced into the cutout (4) in the direction of the longitudinal axis (B) of said clamping part (5) perpendicularly to the provided cable-tensioning direction (A) and/or parallel to the orientation of the cutout (4),
wherein the clamping part (5) has at least one passage (6), extending through the clamping part (5) perpendicularly to the longitudinal axis (B), for receiving the cable (2), in particular a gap that extends along the longitudinal axis (B) into the clamping part (5),
**characterized in that**
the clamping part (5) pushed into the cutout (4) in the carrier part (3) is movable between a tensioning state, in which the cable (2) received in the passage (6) is movable in the passage (6) and thus able to be tensioned, and a clamping state, in which the cable (2) received in the passage (6) is clamped between the clamping part (5) and carrier part (3) and thus a tension in the cable (2) is maintained,
**in that** the clamping part (5) has latching elements (8; 10) on its circumferential surface (7), wherein at least two types of latching elements (8; 10) are provided, wherein at least one first latching element (8) of a first type of latching elements (8) is provided in the region of that end (9) of the clamping part (5) that is oriented towards the carrier part (3) and at least one second latching element (9) of a second type of latching elements (10) is provided in a manner offset at a provided axial spacing along the longitudinal axis (B) with respect to the first type of latching elements (8),
**in that** the cutout (4) has a substantially cylindrical internal face (11) with a longitudinal axis (C), wherein at least one catch (12) is formed on the internal face (11),
**in that**, in the tensioning state, the clamping part (5) is located in a first position in which the at least one first latching element (8) of the clamping part (5) is locked together with the at least one catch (12) of the cutout (4), and
**in that**, in the clamping state, the clamping part (5) is located in a second position in which the at least one second latching element (10) of the clamping part (5) is locked together with the at least one catch (12) of the cutout (4).

2. Tensioning device according to Claim 1,
**characterized in that**
the clamping part (5) is arranged in the cutout (4) so as to be rotatable about its longitudinal axis (B).

3. Tensioning device according to Claim 1 or 2,
**characterized in that**,
in at least one first position rotated about its longitudinal axis (B), the clamping part (5) is transferable from the tensioning state into the clamping state by being displaced along its longitudinal axis (B) into the cutout (4).

4. Tensioning device according to Claim one of Claims 1 to 3,
**characterized in that**
at least one groove (24), parallel to the longitudinal axis (C) of the cutout (4), for guiding the at least one second latching element (10) is provided on the internal face (11) of the cutout (4), wherein the at least one groove (24) extends preferably between that end of the cutout (4) that faces the clamping part (5) and the at least one catch (12).

5. Tensioning device according to one of the preceding claims, **characterized**
**in that** two first latching elements (8) form a first pair of latching elements (8) and two second latching elements (10) form a second pair of latching elements (10), wherein the two latching elements (8; 10) of each pair of latching elements (8; 10) are formed preferably symmetrically to a plane perpendicular to the longitudinal axis (B) of the clamping part (5), and
**in that** two catches (12) form a pair of catches (12), wherein the catches (12) of the pair of catches (12) are formed preferably symmetrically to a plane perpendicular to the longitudinal axis (C) of the cutout (4).

6. Tensioning device according to Claim 5,
**characterized**
**in that** the second pair of latching elements (10) of the clamping part (5) extend only partially around the circumference of the clamping part (5), and
**in that** the pair of catches (12) extend only partially around an internal circumference of the internal face (11) of the cutout (4),
wherein two clearances (13; 14) are formed in the circumferential direction in each case between the two latching elements (10) of the second pair of latching elements (10) and between the two catches (12) of the pair of catches (12),
wherein the clearances (13) between the two latching elements (10) of the second pair of latching elements (10) are at least as long in the circumferential direction as the extent of the catches (12) in the circumferential direction, and the clearances (14) between the two catches (12) are at least as long in the circumferential direction as the extent of the latching elements (10) of the second pair of latching elements (10) in the circumferential direction,
such that, in at least one second position of the clamping part (5) rotated about its longitudinal axis (B), the latching elements (10) of the second pair of latching elements (10) are movable through the two clearances (14) between the catches (12) and the catches (12) are movable through the two clearances (13) between the latching elements (10) of the second pair of latching elements (10),
such that, in the at least one second position rotated about its longitudinal axis (B), the clamping part (5) is transferable from the clamping state into the tensioning state by being displaced along its longitudinal axis (B) out of the cutout (4).

7. Tensioning device according to Claims 3 and 6,
**characterized**
**in that** the tensioning device is configured such that, in order to be transferred from the clamping state into the tensioning state, the clamping part (5) is first of all transferable from the first rotated position into the second rotated position by a rotation, preferably a quarter rotation, of the clamping part (5) about its longitudinal axis (B), and subsequently the clamping part (5), in the second rotated position, is transferable into the tensioning state by being displaced along its longitudinal axis (B) out of the cutout (4).

8. Tensioning device according to one of the preceding claims,
**characterized in that**,
in order to clamp the cable (2) between the clamping part (5) and carrier part (3), a clamping face (15) of the clamping part (5) and a clamping face (16) of the carrier part (3) bear against one another in the clamping state, wherein the clamping face (16) of the carrier part (3) and/or the clamping face (15) of the clamping part (5) preferably have a groove (17), formed parallel to the provided cable tensioning direction (A), for receiving the cable (2), wherein the groove (17) is preferably at least so deep with respect to the clamping face (16) of the carrier part (3) that it can at least partially receive the cable (2) when the clamping part (5) and carrier part (3) are in contact.

9. Tensioning device according to one of the preceding claims,
**characterized in that**
the clamping part (5) is formed partially in a resilient manner by the provision of the passage (6), in particular of the passage (6) configured as a gap, in a plane perpendicular to the longitudinal axis (A) of the clamping part (5), such
that, by pushing the clamping part (5) into the cutout (4), the clamping part (5) is compressed or compressible when the catches (12) and latching elements (8; 10) pass one another, and
that, after the catches (12) and latching elements (8; 10) have passed one another, the clamping part (5) is locked or lockable together with the carrier part (3) by springing apart, wherein the latching elements (8; 10) engage behind the catches (12), and wherein the clamping part (5) assumes its tensioning state when the catches (12) are locked together with the first latching elements (8) and assumes its clamping state when the catches (12) are locked together with the second latching elements (10).

10. Tensioning device according to one of the preceding claims,
**characterized in that**
the clamping part (5) has an attachment groove (19), on a face (18) facing away from the carrier part (3), for attaching a tool for carrying out a rotary movement, wherein the attachment groove (19) extends preferably perpendicularly to the longitudinal axis (B) of the clamping part (5).

11. Tensioning device according to one of the preceding claims,
**characterized in that**
the tensioning device (1) comprises a covering cap (20), wherein the covering cap (20) is connected or connectable to the carrier part (3), wherein the covering cap (20) covers the clamping part (5) and the cutout (4) in the connected state,
wherein the covering cap (20) has an opening (23), preferably a gap (23), for passing through the cable in each of its top and bottom surfaces (21; 22) in the cable tensioning direction (A).

## Revendications

1. Dispositif de tension (1) pour le maintien de la tension d'un câble (2), qui sert plus particulièrement à maintenir une protection visuelle et/ou solaire, comprenant:
une partie de support (3) pour la fixation du dispositif de tension (1) à un fond, la partie de support (3) comprenant un évidement (4) dont l'orientation en direction de l'intérieur de la partie de support (3) ou à travers la partie de support (3) est perpendiculaire à une direction de tension de câble prévue (A) et
une partie de serrage (5) globalement en forme de tige, qui est insérée en direction de son axe longitudinal (B) perpendiculairement à la direction de tension de câble prévue (A) et/ou parallèlement à l'orientation de l'évidement (4) dans l'évidement (4),
la partie de tension (5) comprenant au moins un passage (6) s'étendant perpendiculairement à l'axe longitudinal (B) à travers la partie de tension (5), pour le logement du câble (2), plus particulièrement un interstice s'étendant le long de l'axe longitudinal (B) et atteignant la partie de tension (5),
**caractérisé**
**en ce que** la partie de serrage (5) insérée dans l'évidement (4) de la partie de support (3) est mobile entre un état de tension, dans lequel le câble (2) logé dans le passage (6) est mobile dans le passage (6), et donc peut être tendu, et un état de tension, dans lequel le câble (2) logé dans le passage (6) est serré entre la partie de serrage (5) et la partie de support (3) et une tension du câble (2) est donc maintenue,
**en ce que** la partie de serrage (5) comprend, sur la surface circonférentielle (7), des éléments d'encliquetage (8; 10), au moins deux types d'éléments d'encliquetage (8; 10) étant prévus, au moins un premier élément d'encliquetage (8) d'un premier type d'éléments d'encliquetage (8) étant prévu au niveau de l'extrémité (9) de la partie de serrage (5), orientée vers la partie de support (3) et au moins un deuxième élément d'encliquetage (9) d'une deuxième type d'éléments d'encliquetage (10) étant disposés à une distance axiale prévu le long de l'axe longitudinal (B), de manière décalée par rapport au premier type d'éléments d'encliquetage (8),
**en ce que** l'évidement (4) comprend une surface interne (11) globalement cylindrique avec un axe longitudinal (C), au moins un embout d'encliquetage (12) étant prévu sur la surface interne (11),
**en ce que** la partie de serrage (5) se trouvant, dans l'état de serrage, dans une première position, dans laquelle l'au moins un premier élément d'encliquetage (8) de la partie de serrage (5) sont encliqueté avec l'au moins un embout d'encliquetage (12) de l'évidement (4) et
**en ce que** la partie de serrage (5) se trouve, dans l'état de serrage, dans une deuxième position, dans laquelle l'au moins un deuxième élément d'encliquetage (10) de la partie de serrage (5) soit encliqueté avec l'au moins un embout d'encliquetage (12) de l'évidement (4).

2. Dispositif de tension selon la revendication 1, **caractérisé en ce que** la partie de serrage (5) est disposée de manière rotative autour de son axe longitudinal (B) dans l'évidement (4).

3. Dispositif de tension selon la revendication 1 ou 2, **caractérisé en ce que** la partie de serrage (5) peut être transférée, dans au moins une première position de rotation autour de son axe longitudinal (B), de l'état de tension, par coulissement le long de son axe longitudinal (B) vers l'évidement (4) dans l'état de serrage.

4. Dispositif de tension selon l'une des revendications 1 à 3, **caractérisé en ce que**, au niveau de la surface interne (11) de l'évidement (4), au moins une rainure (24) parallèle à l'axe longitudinal (C) de l'évidement (4) est prévue pour le guidage de l'au moins un deuxième élément d'encliquetage (10), l'au moins une rainure (24) s'étendant de préférence entre l'extrémité de l'évidement (4) orientée vers la partie de serrage (5) et l'au moins un embout d'encliquetage (12).

5. Dispositif de tension selon l'une des revendications précédentes, **caractérisé en ce que** deux premiers éléments d'encliquetage (8) forment une première paire d'éléments d'encliquetage (8) et deux deuxièmes éléments d'encliquetage (10) forment une deuxième paire d'éléments d'encliquetage (10), les deux éléments d'encliquetage (8; 10) de chaque paire d'éléments d'encliquetage (8; 10) étant conçu de préférence de manière symétrique par rapport à un plan perpendiculaire à l'axe longitudinal (B) de la partie de serrage (5) et **en ce que** deux embouts d'encliquetage (12) forment une paire d'embouts d'encliquetage (12), les embouts d'encliquetage (12) de la paire d'embouts d'encliquetage (12) étant conçus de préférence de manière symétrique par rapport à un plan perpendiculaire à l'axe longitudinal (C) de l'évidement (4).

6. Dispositif de tension selon la revendication 5, **caractérisé en ce que** la deuxième paire d'éléments d'encliquetage (10) de la partie de serrage (5) s'étend seulement partiellement le long de la circonférence de la partie de serrage (5) et
**en ce que** la paire d'embouts d'encliquetage (12) s'étend seulement partiellement le long d'une circonférence interne de la surface interne (11) de l'évidement (4),
des espaces libres (13; 14) étant prévus entre les deux éléments d'encliquetage (10) de la deuxième paire d'éléments d'encliquetage (10) et entre les deux embouts d'encliquetage (12) de la paire d'embouts d'encliquetage (12) dans la direction de la circonférence, les espaces libres (13) entre les deux éléments d'encliquetage (10) de la deuxième paire d'éléments d'encliquetage (10) étant, dans la direction de la circonférence, au moins aussi longs que l'extension des embouts d'encliquetage (12) dans la direction de la circonférence et les espaces libres (14) entre les deux embouts d'encliquetage (12) dans la direction de la circonférence étant au moins aussi longs que l'extension des éléments d'encliquetage (10) de la deuxième paire d'éléments d'encliquetage (10) dans la direction de la circonférence,
de façon à ce que les éléments d'encliquetage (10) de la deuxième paire d'éléments d'encliquetage soient mobiles, dans au moins une deuxième position de rotation de la partie de serrage (5) autour de son axe longitudinal (B), grâce aux deux espaces libres (14) entre les embouts d'encliquetage (12) et les embouts d'encliquetage (12) soient mobiles grâce aux deux espaces libres (13) entre les éléments d'encliquetage (10) de la deuxième paire d'éléments d'encliquetage (10),
de façon à ce que la partie de serrage (5) puisse être déplacée, dans l'au moins une deuxième position de rotation autour de son axe longitudinal (B), de l'état de serrage, par coulissement le long de son axe longitudinal (B), hors de l'évidement (4), vers l'état de tension.

7. Dispositif de tension selon les revendications 3 et 6, **caractérisé en ce que** le dispositif de tension est conçu de façon à ce que la partie de serrage (5) puisse être déplacée, pour le passage de l'état de serrage à l'état de tension, d'abord par une rotation, de préférence d'un quart de tour, de la partie de serrage (5) autour de son axe longitudinal (B), de la première position de rotation vers la deuxième position de rotation puis la partie de serrage (5) peut être déplacée, dans la deuxième position de rotation, par coulissement le long de son axe longitudinal (B), hors de l'évidement (4) vers l'état de tension.

8. Dispositif de tension selon les revendications précédentes, **caractérisé en ce que**, pour le serrage du câble (2) entre la partie de serrage (5) et la partie de support (3) dans l'état de serrage, une surface de serrage (15) de la partie de serrage (5) et une surface de serrage (16) de la partie de support (3) s'appuient l'une contre l'autre, la surface de serrage (16) de la partie de support (3) et/ou la surface de serrage (15) de la partie de serrage (5) comprenant de préférence une rainure (17) réalisée parallèlement par rapport à la direction de tension de câble prévue (A), pour le logement du câble (2), la rainure (17) présentant, par rapport à la surface de serrage (16) de la partie de support (3), de préférence une profondeur telle qu'elle puisse loger le câble (2) au moins partiellement lors d'un contact entre la partie de serrage (5) et la partie de support (3).

9. Dispositif de serrage selon l'une des revendications précédentes, **caractérisé en ce que** la partie de serrage (5) est conçue de manière élastique à certains endroits en disposant le passage (6), plus particulièrement le passage (6) conçu comme un interstice, dans un plan perpendiculaire à l'axe longitudinal (A) de la partie de serrage (5),
de façon à ce que, par l'insertion de la partie de serrage (5) dans l'évidement (4), la partie de serrage (5) soit comprimée ou puisse être comprimée par le passage des embouts d'encliquetage (12) et des éléments d'encliquetage (8; 10) et
de façon à ce que, après le passage des embouts d'encliquetage (12) et des éléments d'encliquetage (8; 10), la partie de serrage (5) soit encliquetée ou puisse être encliquetée par assemblage élastique avec la partie de support (3), les éléments d'encliquetage (8; 10) s'emboîtant par l'arrière avec les embouts d'encliquetage (12) et la partie de serrage (5) passant à l'état de tension lors de l'encliquetage des embouts d'encliquetage (12) avec les premiers éléments d'encliquetage (8) et passant à son état de serrage lors de l'encliquetage des embouts d'encliquetage (12) avec les deuxièmes éléments d'encliquetage (10).

10. Dispositif de serrage selon l'une des revendications précédentes, **caractérisé en ce que** la partie de serrage (5) comprend, au niveau d'une surface (18) opposée à la partie de support (3), une rainure de montage (19) pour l'ajout d'un outil permettant d'effectuer un mouvement de rotation, la rainure de montage (19) s'étendant de préférence perpendiculairement à l'axe longitudinal (B) de la partie de serrage (5).

11. Dispositif de serrage selon l'une des revendications précédentes, **caractérisé en ce que** le dispositif de tension (1) comprend un capuchon de protection (20), le capuchon de protection (20) étant relié ou pouvant être relié à la partie de support (3), le capuchon de protection (20) recouvrant, dans l'état assemblé, la partie de serrage (5) ainsi que l'évidement (4),
le capuchon de protection (20) comprenant, au niveau de chacune de ses surfaces (21; 22) côté tête et côté fond dans la direction de la tension du câble (A), une ouverture (23), de préférence un interstice (23), pour le passage du câble (2).
